# EUROPEAN PATENT SPECIFICATION

(11) **EP 2 073 900 B1**
(45) Date of publication and mention of the grant of the patent: **29.05.2013**
(21) Application number: 07839551.4
(22) Date of filing: 15.10.2007
(51) Int. Cl.: A62D 1/00, C11D 1/825

(54) **SURFACTANTS AND METHODS FOR USING IN EMULSION POLYMERIZATION REACTIONS AND POLYMER DISPERSIONS, AND FOR STABILIZING EMULSION POLYMERS AND POLYMER DISPERSIONS**
TENSIDE UND VERFAHREN ZU IHRER VERWENDUNG IN EMULSIONSPOLYMERISIERUNGSREAKTIONEN UND POLYMERDISPERSIONEN SOWIE ZUR STABILISIERUNG VON EMULSIONSPOLYMEREN UND POLYMERDISPERSIONEN
TENSIOACTIFS ET LEURS PROCÉDÉS D'UTILISATION DANS DES RÉACTIONS DE POLYMÉRISATION D'ÉMULSION ET DE DISPERSION DE POLYMÈRES, ET DANS LA STABILISATION DE POLYMÈRES EN ÉMULSION ET DE DISPERSIONS DE POLYMÈRES

(30) Priority: 20.10.2006 US 853344 P; 03.11.2006 US 856638 P; 09.10.2007 US 869185
(43) Date of publication of application: 01.07.2009
(73) Proprietor: Cognis IP Management GmbH, 40589 Düsseldorf (DE)
(72) Inventor: FERNANDEZ, Ana Maria, Chalfont, PA 18914 (US); ALLEN, Michael, Greenville, SC 29611 (US); CREWS, Richard, Simpsonville, SC 29681 (US)
(86) International application number: PCT/US2007/021959
(87) International publication number: WO 2008/051389

(56) References cited:
- US-A- 5 346 973
- US-A- 5 562 866
- US-A- 5 807 502
- US-A- 5 854 196

## Description

### BACKGROUND OF THE INVENTION

### Field of the Invention

The invention relates generally to surfactants, and more particularly to surfactants and methods for using the surfactants in emulsion polymerization reactions and polymer dispersions, and for stabilizing emulsion polymers and polymer dispersions.

### Background Information

Emulsion polymers obtained by emulsion polymerization of ethylenically unsaturated monomers are used industrially for architectural coatings, adhesives, paper coatings, and textiles. Anionic surfactants or non-ionic surfactants may be used as emulsifiers for emulsion polymerization reactions. The emulsifier may affect the mechanical, chemical, freezing, and storage stability of an emulsion polymer, in addition to affecting, for example, the polymer particle diameter, viscosity, and foaming characteristics. Additionally, the emulsifier may also affect the water, moisture, and heat resistance, and also the adhesiveness of a polymer film formed from the emulsion polymer.

US 5, 346, 973 discloses the use of pourable liquid surfactant concentrates of non-ionic surfactant mixtures in water as a polymerization emulsifier.

There remains a need for surfactants and methods for using surfactants in emulsion polymerization reactions and polymer dispersions, and for stabilizing emulsion polymers and polymer dispersions.

### SUMMARY OF THE INVENTION

Briefly described, according to an aspect of the invention, a surfactant concentrate includes: (a) a compound according to general formula (III):

R¹O-[CH₂-CH₂O]ₙ-H (III)

where R¹ is a saturated or unsaturated, branched C₆₋₂₂ radical with an average branching of about 2 to about 8 per radical, and n represents a value from 0 to about 100; and (b) a compound according to general formula (IV): 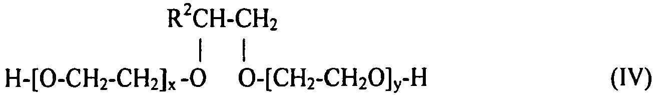 where R² is a saturated or unsaturated C₈₋₁₆ radical, and x and y each represent a value from 0 to 100, where the sum of x and y represents a value of at least 1 to 100.

According to an aspect of the invention, water may be added to the surfactant concentrate to form a liquid surfactant composition. The surfactant concentrate, or the liquid surfactant composition, may be added to an emulsion polymerization reaction or a polymer dispersion in an amount of from about 0.3% to about 10% by weight, based on the total weight of the emulsion polymerization reaction or the polymer dispersion, to carry out the polymerization reaction or to stabilize the polymer particles in the polymer dispersion.

According to another aspect of the invention, a method for stabilizing an emulsion polymer or a polymer dispersion includes the step of: adding, to an emulsion polymer or to a polymer dispersion, from about 0.3% to about 10% by weight, based on the total weight of the reaction product, including: a compound according to general formula (V):

R¹-O-[CH₂-CH₂O]ₙ-A (V)

where R¹ is a saturated or unsaturated, branched C₆₋₂₂ radical with an average branching of about 2 to about 8 per radical, n represents a value from 0 to about 100, and A is selected from the group consisting of methyl, butyl, and benzyl; and a compound according to general formula (VI): 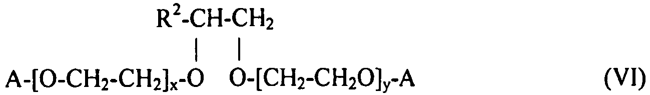 where R² is a saturated or unsaturated C₈₋₁₆ radical, and x and y each represent a value from 0 to 100, where the sum of x and y represents a value of at least 1 to 100, and A is selected from the group consisting of methyl, butyl, and benzyl.

### DETAILED DESCRIPTION OF THE INVENTION

As used herein, the terms "comprises", "comprising", "includes", "including", "has", "having", or any other variation thereof, mean that other elements or components may be included. For example, a process, method, article, or apparatus that comprises a list of elements is not necessarily limited to the expressly listed elements, but may include other elements inherent, or not expressly listed, to such process, method, article, or apparatus. In addition, unless expressly stated to the contrary, the term "or" refers to an inclusive "or" and not to an exclusive "or". For example, the condition A "or" B is satisfied by any one of the following: A is true (included) and B is false (omitted); A is false (omitted) and B is true (included); and both A and B are true (both included).

The terms "a" or "an" are used to describe elements and components of the invention. This is done for convenience to the reader and to provide a general sense of the invention. The use of "a" or "an" should be understood to include one or at least one. In addition, the singular also includes the plural, unless indicated to the contrary. For example, reference to a composition containing "a compound" includes at least one or more compound(s).

According to an aspect of the invention, in one embodiment, a surfactant concentrate comprises: (a) a compound according to general formula (III):

R¹O-[CH₂-CH₂O]ₙ-H (III)

wherein R¹ is a saturated or unsaturated, branched C₆₋₂₂ radical with an average branching of about 2 to about 8 per radical, and wherein n represents a value from 0 to about 100; and (b) a compound according to general formula (IV): 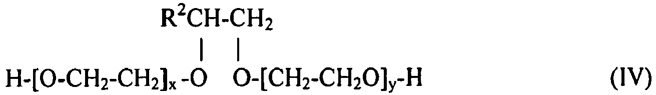 wherein R² is a saturated or unsaturated C₈₋₁₆ radical, and x and y each represent a value from 0 to 100, wherein the sum of x and y represents a value of at least 1 to 100.

In the surfactant concentrate, n may represent a value from 0 to about 75. In the surfactant concentrate, x and y may each represent a value from 0 to about 75, and the sum of x and y may represent a value of at least 1 to 75. In the surfactant concentrate, R² may contain about 6 to about 14 carbon atoms, and/or R¹ may predominantly contain 13 carbon atoms. It should be understood that although R¹ may predominantly contain 13 carbon atoms, alcohols with different carbon-chain lengths may also be present, including, for example, C₉ and C₁₀ alcohols (about 2%) and C₁₄ alcohols (about 10%). In the surfactant concentrate, R¹ may be saturated and have an average branching of about 2 to about 4 per radical, or R¹ may be saturated and have an average branching of about 2.5 to about 3.5 per radical.

In the surfactant concentrate, component (a) may be present in an amount from about 10% to about 99% by weight, and component (b) may be present in an amount from about 1% to about 90% by weight, based on the total weight of the concentrate. Alternatively, component (a) may be present in an amount from about 15% to about 95% by weight, and component (b) may be present in an amount from about 5% to about 85% by weight, based on the total weight of the concentrate. Alternatively, component (a) may be present in an amount from about 20% to about 90% by weight, and component (b) may be present in an amount from about 10% to about 80% by weight, based on the total weight of the concentrate. Alternatively, component (a) may be present in an amount from about 20% to about 80% by weight, and component (b) may be present in an amount from about 20% to about 80% by weight, based on the total weight of the concentrate. At least one or more terminal hydrogen on each compound according to general formula III and general formula IV may also be capped (substituted) with an alkyl radical selected from the group consisting of methyl, butyl, and benzyl, according to an aspect of the invention. The surfactant concentrate may be added to water to form a pourable, liquid surfactant composition.

A method for making the surfactant concentrate comprises the steps of: (a) providing at least one alcohol according to general formula (I):

R¹-OH (I)

wherein R¹ represents a saturated or unsaturated, branched C₆₋₂₂ radical with an average branching of from about 2 to about 8 per radical; (b) providing at least one diol according to general formula (II): 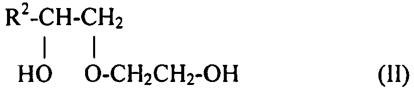 wherein R² represents a saturated or unsaturated C₈₋₁₆ radical; (c) combining compound (I) and compound (II) to form a mixture; and (d) ethoxylating the mixture to obtain a reaction product, comprising: a compound according to general formula (III):

R¹-O-[CH₂-CH₂O]ₙ-H (III)

wherein R¹ is as defined above, and wherein n represents a value from 0 to about 100; and a compound according to general formula (IV): 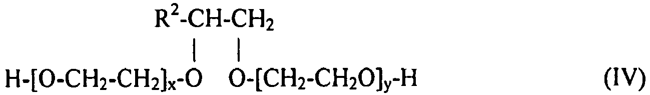 wherein R² is as defined above, x and y each represent a value from 0 to 100, and wherein the sum of x and y represents a value of at least 1 to 100. Step (d) may be conducted at a temperature of about 100°C to about 180°C, and at a maximum pressure of about 70 psi. An alkali catalyst may be added in step (d).

The surfactant concentrate, which includes a compound corresponding to general formula (III) and a compound corresponding to general formula (IV), is made by coethoxylation (simultaneous ethoxylation) of a mixture of compounds corresponding to general formulas (I) and (II). At least one of the alcohol compounds according to general formula (I) in the coethoxylation process is branched. Branching may occur at any position on the carbon chain of the alcohol. For example, a suitable average branching ranges between about 2 to about 8 per radical. In another embodiment, the average branching may range between about 2 to about 4, and in another embodiment, the average branching may range between about 2.5 to about 3.5 per radical. It should be understood that a suitable compound according to general formula (I) may include a mixture of one or more branched alcohols with varying amounts of branching per radical.

A suitable branched alcohol according to formula (I) includes, but is not limited to, tridecyl alcohol, octylphenol, nonylphenol, or dodecylphenol. A suitable tridecyl alcohol is available from ExxonMobil Chemical Company under the trademark EXXAL® (EXXAL® 13), or from Sasol under the trademark SAFOL® (SAFOL® 23). Other suitable branched alcohols are available from ExxonMobil under the trademark EXXAL®. Suitable branched alcohols, including octylphenol, nonylphenol and dodecylphenol, are also available from Schenectady International, Inc., in New York. Suitable branched alcohols according to general formula (I) also include, but are not limited to, branched alcohols available under the trademark NEODOL®, from Shell Chemical Company in Texas.

In addition to at least one branched alcohol according to formula (I), a compound according to general formula (II) is included in the coethoxylation process. Suitable compounds according to general formula (II) include linear, even or odd numbered, primary or secondary, fatty or synthetic alcohols. Suitable compounds according to general formula (II) are commercially readily available, for example, from Cognis Corporation, of Ohio. A suitable secondary alcohol according to general formula (II) includes β-2-hydroxyethoxy alcohol, but is not limited thereto.

Compounds according to general formulas (I) and (II) are mixed, in a suitable vessel, prior to coethoxylation. During ethoxylation, the mixture is subjected to elevated temperatures ranging between about 100°C to about 180°C, at a maximum pressure of about 70 psi. The process of coethoxylation (simultaneous ethoxylation) is carried out in the presence of suitable catalysts, including sodium hydroxide (NaOH) or potassium hydroxide (KOH). Sodium ethylate or sodium methylate may also be used, but the reaction produces unwanted by-products, including ethanol and methanol.

According to another aspect of the invention, in another embodiment, a pourable, liquid surfactant composition includes the surfactant concentrate in water. A selected quantity of water may be added, under agitation, to the surfactant concentrate, at a temperature ranging from about 25°C to about 80°C to form a liquid surfactant composition. The liquid surfactant composition may be cooled and water may be added to replace any water lost during the conversion. The surfactant concentrate may be present in the liquid surfactant composition in an amount of from about 30% to about 90% by weight, based on the total weight of the liquid surfactant composition, wherein the amounts by weight total 100%. The surfactant concentrate may be present in the liquid surfactant composition in an amount of from about 40% to about 85% by weight, based on the total weight of the liquid surfactant composition. The surfactant concentrate may also be present in the liquid surfactant composition an amount of from about 50% to about 80% by weight, based on the total weight of the liquid surfactant composition. The solidification point of the liquid surfactant composition may be less than 15°C. The solidification point may also be less than 0°C. The liquid surfactant composition may have a viscosity at 25°C of less than 2000 cps. The liquid surfactant composition may have a viscosity at 25°C of less than 1000 cps. The difference in solidification points and viscosities depends, in one aspect, upon the selected ratios of compounds according to general formulas (III) and IV).

In another embodiment of the invention, the compounds according to general formula (III) and (IV) are reacted with a suitable reactant, for example, methyl chloride, butyl chloride, or benzyl chloride, resulting in one or more terminal hydrogen group on each compound according to general formulas (III) and (IV) being capped with a methyl, butyl, or benzyl group.

According to another aspect of the invention, a method for stabilizing an emulsion polymer or a polymer dispersion comprises the step of: adding, to an emulsion polymer or a polymer dispersion, from about 0.3% to about 10% by weight, based on the total weight of a reaction product, comprising: a compound according to general formula (V):

R¹-O-[CH₂-CH₂O]ₙ-A (V)

wherein R¹ is a saturated or unsaturated, branched C₆₋₂₂ radical with an average branching of about 2 to about 8 per radical, wherein n represents a value from 0 to about 100, and wherein A is selected from the group consisting of methyl, butyl, and benzyl; and
a compound according to general formula (VI): 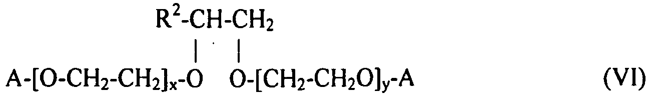 wherein R² is a saturated or unsaturated C₈₋₁₆ radical and x and y each represent a value from 0 to 100, wherein the sum of x and y represents a value of at least 1 to 100, and wherein A is selected from the group consisting of methyl, butyl, and benzyl.

According to an aspect of the invention, the above-described components (V) and (VI) may be in the form of a surfactant concentrate or a pourable, liquid surfactant composition. Alternatively, from about 0.5% to about 5% by weight, based on the total weight of the reaction product, may be added to an aqueous emulsion polymer or polymer dispersion. Alternatively, from about 0.5% to about 1% by weight, based on the total weight of the reaction product, may be added to an aqueous emulsion polymer or polymer dispersion.

Advantageously, in the emulsion polymerization reaction of ethylenically unsaturated monomers, the surfactant concentrate or liquid surfactant composition may be added to an emulsion polymerization reaction to carry out the polymerization reaction. In an emulsion polymerization reaction or polymer dispersion, the surfactant concentrate or liquid surfactant composition may be added in amounts from about 0.3% to about 10% by weight, based on the total weight in the emulsion polymerization reaction or polymer dispersion. Alternatively, from about 0.5% to about 6% by weight of the surfactant concentrate or liquid surfactant composition, based on the total weight in the emulsion polymerization reaction or polymer dispersion, may be added. Alternatively, from about 1% to about 3% by weight of the surfactant concentrate or liquid surfactant composition may be added, based on the total weight in the emulsion polymerization reaction or polymer dispersion.

Suitable ethylenically unsaturated monomers include, but are not limited to C₁₋₁₂ alkyl acrylates, including, but not limited to n-butyl acrylate, 2-ethylhexyl acrylate, and mixtures thereof; C₁₋₁₂ alkyl methacrylates including, but not limited to ethyl (meth)acrylate, methyl (meth)acrylate, n-butyl methacrylate, isobutyl methacrylate, t-butyl methacrylate, and mixtures thereof; vinylaromatic compounds including, but not limited to styrene, α-methylstyrene, 3- and 4-vinyltoluene, and mixtures thereof; ethylenically unsaturated carboxylic acids including, but not limited to C₃₋₆ α,β-monoethylenically unsaturated mono- and dicarboxylic acids, for example, acrylic acid, methacrylic acid, maleic acid, fumaric acid, itaconic acid, and mixtures thereof; and unsaturated carboxamides, including, but not limited to acrylamide, methacrylamide, 2-acrylamide-2-methylpropanesulfonic acid, N-methylolacrylamide, N-methylolmeth-acrylamide, and mixtures thereof. Other examples of ethylenically unsaturated monomers include aliphatic vinyl esters, for example, vinyl acetate, vinyl propionate, vinyl butyrate and isobutyrate, vinyl valerate, vinyl caproate, and mixtures thereof.

The adducts of ethylene oxide with linear fatty alcohols exhibit limited water miscibility, very high viscosities, and high solidification temperatures.
Advantageously, the pourable, liquid non-ionic surfactants according to an aspect of the invention have enhanced water miscibility, lower viscosities, lower solidification temperatures, and enhanced surface activity. The surfactant concentrates and liquid compositions advantageously provide for improved solubility and performance in aqueous coating compositions, including, for example, paint formulations.

Advantageously, according to an aspect of the invention, the surfactant concentrates and liquid compositions have low freezing (solidification) points, without the need for adding an anti-freezing agent. In one aspect of the invention, the concentrate has a solidification point (SP) below 15°C, in another aspect, an SP below 5°C, and in another aspect, an SP below 0°C. The difference in solidification points depends, in one aspect, upon the selected ratios of compounds according to general formulas (III) and IV).

Waterborne polymer compositions containing the surfactant concentrate or the liquid surfactant composition may be used in a variety of coating applications, including, for example, paints, inks, sealants, and adhesives. The surfactant concentrates and liquid surfactant compositions are also suitable for use in formulations for coating metal, wood, plastic, paper, and textiles. The surfactants and liquid surfactant compositions may also be used in other applications, including for example, home and personal care chemical products, including detergents and cleaning formulations.

The liquid surfactant composition may also be advantageously used for post-polymerization stabilization of latex formulations with high filler content, for example, inorganic fillers containing divalent metallic ions, including calcium, magnesium, and zinc that are conventionally used in traffic paints, paper coatings, and architectural coatings.

The surfactant concentrate and liquid surfactant composition may include a biocide to prevent microbial growth, and other components that do not materially affect the basic characteristics and efficacy of the composition.

Unless otherwise defined, all technical and scientific terms used herein have the same meaning as commonly understood by one of ordinary skill in the art to which the invention belongs. Although methods and materials similar or equivalent to those described herein can be used in the practice or testing of the invention, suitable methods and materials are described below. The materials, methods and examples disclosed herein are illustrative only, and are not intended to be limiting.

### Examples

### Example 1

### Production of Surfactant Mixtures (concentrates)

Component A, a predominantly C₁₃ primary saturated branched alcohol, was mixed with Component B (prepared by the ring-opening of a terminally epoxidized C₁₂/C₁₄ alkane mixture (67% by weight C₁₂ and approximately 33% by weight C₁₄) with equimolar quantities of ethylene glycol based on epoxy content). The mixture of Components A and B was reacted with various molar quantities of ethylene oxide.

### Example 2 (comparative)

Component C, a linear fatty alcohol mixture containing about 0% to about 2% by weight n-decanol, about 70% to about 75% by weight of lauric alcohol (C₁₂), about 24% to about 30% by weight myristic alcohol (C₁₄) and about 0% to 2% by weight cetyl alcohol (C₁₆), was mixed with Component B of Example 1. The mixture of Components B and C was reacted with various molar quantities of ethylene oxide.

### Example 3

3.1 Nonylphenol (Component D) was mixed with Component B. The mixture of Components B and D was reacted with various molar quantities of ethylene oxide.
3.2 Octyl phenol (Component E) was mixed with Component B. The mixture of Components B and E was reacted with various molar quantities of ethylene oxide.
3.3 A synthetic alcohol mixture containing 67% by weight of a primary C₁₃ alcohol and 33% of a C₁₅ alcohol (Component F) was mixed with Component B. The mixture of Components B and F was reacted with various molar quantities of ethylene oxide.

### Example 4

The surfactant mixtures thus obtained were converted, with water at temperatures of 40°C to 70°C, into liquid surfactant compositions, which differed in their total surfactant content and in the composition of the surfactant mixtures. Water was added to a selected quantity of surfactant concentrate, sufficient to give 100 grams of liquid surfactant composition. After cooling to room temperature, any water lost during the conversion was replaced.

Table 1 illustrates the surfactant concentrates obtained by ethoxylation of the mixtures of Examples 1 and 2, reacted with different levels of ethylene oxide. In the notation M/A/B:X°C, M represents parts by weight of a surfactant concentrate (a mixture consisting of "A" parts of Component A according to general formula (III), and "B" parts of Component B according to general formula (IV), the sum of A and B equal to 100) in water, and X°C is the temperature of solidification. For example, the values 50/90/10 represent 50% of the surfactant concentrate in water (50% by weight), and 90/10 represent the amounts of each Component (A and B) present in the mixture, or, for example, the values 60/70/30 represent 60% of the surfactant concentrate in water, where 40% by weight of the total composition is water.

**Table 1**

| Example 4 containing surfactant mixtures according to Example 1 @ 40EO | | Example 4 containing surfactant mixtures according to Example 2 @ 30EO | |
|---|---|---|---|
| M/A/B | X°C | M/A/B | X°C |
| 50/90/10 | -6°C | 60/50/50 | <10°C |
| 50/80/20 | -10°C | 50/90/10 | 14°C |
| 50/70/30 | -12°C | 50/90/10 | 11°C |
| 60/70/30 | -1°C | | |
| 60/67/33 | -2°C | | |
| 75/80/20 | -6°C | | |
| 75/90/10 | -4°C | | |

As illustrated in Table 1, the fatty alcohols of Example 2 had significantly higher solidification points than those of Example 1 according to an aspect of the invention.

### Example 5

Various non-ionic surfactants according to Example 4 (prepared according to Example 1) were evaluated as suitable emulsifiers for emulsion polymerization. The several monomer compositions evaluated were (1) 51% methyl methacylate/49% butyl acrylate/1% methacrylic acid; (2) 50% styrene/49% butyl acrylate/1% methacrylic acid; and (3) 80% vinyl acetate/19% butyl acrylate/1% methacrylic acid.

The amount of coagulum formed is a measure of the degree of mechanical stability of the latexes. It was found that the amount of coagulum formed using the surfactants listed in Example 4 (prepared according to Example 1) was similar or significantly less than the amount of coagulum formed in latexes made with alkyl surfactants (prepared according to Example 2) with a similar level of ethoxylation as illustrated in Example 4. The results demonstrate that the surfactant concentrates according to the invention are suitable for use in commercial emulsion polymerizations for acrylic copolymers, vinyl acetate copolymers, vinyl neonate copolymers, and styrene copolymers.

### Example 6

Post polymerization stabilization is important for latex formulations with high filler content (for example, inorganic fillers containing divalent metallic ions, including calcium, magnesium, and zinc) conventionally used in application for traffic paints, paper coatings, architectural coatings, and in general highly formulated coatings. The highly ethoxylated (high hydrophilic-lipophilic balance (HLB) values) of the surfactants of Example 4 containing the surfactants in water according to Example 2 have indicated excellent performance as post polymerization emulsifiers for improving the electrostatic stability of latexes, including acrylic copolymers, styrene copolymers, vinyl acetate copolymers and styrene butadiene copolymers. Therefore, it is inferred that the surfactants of Example 4, containing surfactant mixtures according to Example 1, have equally similar, if not improved, performance characteristics.

The invention has been described with reference to specific embodiments. One of ordinary skill in the art, however, appreciates that various modifications and changes can be made without departing from the scope of the invention as set forth in the claims. For example, although the examples used certain branched alcohols, other branched alcohols may be suitable for the surfactant concentrates and liquid surfactant compositions according to the invention. In addition, although exemplary monomers are described, there is a multitude of monomers, polymer dispersions, and emulsion polymers suitable for use according to an aspect of the invention. Accordingly, the specification is to be regarded in an illustrative manner, rather than with a restrictive view, and all such modifications are intended to be included within the scope of the invention.

Benefits, advantages, and solutions to problems have been described above with regard to specific embodiments. The benefits, advantages, and solutions to problems, and any element(s) that may cause any benefit, advantage, or solution to occur or become more pronounced, are not to be construed as a critical, required, or an essential feature or element of any or all of the claims.

## Claims

1. A surfactant concentrate, comprising:
(a) a compound according to general formula (III):
R¹O-(CH₂-CH₂O]ₙ-H (III)
wherein R¹ is a saturated or unsaturated, branched C₆₋₂₂ radical with an average branching of about 2 to about 8 per radical, and wherein n represents a value from 0 to about 100, and
(b) a compound according to general formula (IV): 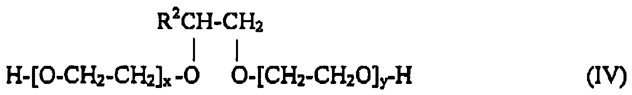 wherein R² is a saturated or unsaturated C₈₋₁₆ radical, and x and y each represent a value from 0 to 100, wherein the sum ofx and y represents a value of at least 1 to 100,
with the proviso that the solidification point of the surfactant composition which results by adding water to the surfactant concentrate is less than 0°C.

2. The surfactant concentrate according to Claim I, wherein x and y each represent a value from 0 to about 75, and the sum of x and y represents a value of at least 1 to 75.

3. The surfactant concentrate according to Claim 1, wherein R² contains about 6 to about 14 carbon atoms.

4. The surfactant concentrate according to Claim 1, wherein R¹ predominantly contains 13 carbon atoms.

5. The surfactant concentrate according to Claim 1, wherein R¹ is saturated and has an average branching of about 2 to about 4 per radical.

6. The surfactant concentrate according to Claim 1, wherein component (a) is present in an amount from about 10% to about 99% by weight, and component (b) is present in an amount from about 1% to about 90% by weight, based on the total weight of the concentrate.

7. The surfactant concentrate according to Claim 1, to which water is added to form a liquid surfactant composition.

8. The surfactant composition according to Claim 7, wherein the surfactant concentrate is present in an amount of from about 30% to about 90% by weight, based on the total weight of the liquid surfactant composition.

9. The surfactant composition according to Claim 7, wherein the viscosity at 25°C is less than 2000 cps.

10. The surfactant composition according to Claim 7, wherein the viscosity at 25°C is less than 1000 cps.

11. The surfactant concentrate according to Claim 1, wherein the surfactant concentrate is added to an emulsion polymerization reaction or a polymer dispersion In an amount of from about 0.3% to about 10% by weight, based on the total weight of the emulsion polymerization reaction or the polymer dispersion.

12. The surfactant composition according to Claim 7, wherein the liquid surfactant composition is added to an emulsion polymerization reaction or a polymer dispersion in an amount of from about 0.3% to about 10% by weight, based on the total weight of the emulsion polymerization reaction or the polymer dispersion.

13. A method for stabilizing an emulsion polymer or a polymer dispersion, comprising the step of:
adding, to an emulsion polymer or a polymer dispersion, about 0.3% to about 10% by weight, based on the total weight of a reaction product, comprising:
a compound according to general formula (V):
R¹-O-[CH₂-CH₂O]ₙ-A (V)
wherein R¹ is a saturated or unsaturated, branched C₆₋₂₂ radical with an average branching of about 2 to about 8 per radical, wherein n represents a value from 0 to about 100, and wherein A is selected from the group consisting of methyl, butyl, and benzyl; and
a compound according to general formula (VI): 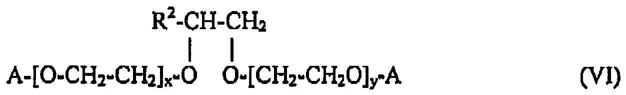 wherein R² is a saturated or unsaturated C₈₋₁₆ radical and x and y each represent a value from 0 to 100, wherein the sum of x and y represents a value of at least 1 to 100, and wherein A is selected from the group consisting of methyl, butyl, and benzyl.

14. The method according to Claim 13, wherein about 0.5% to about 5% by weight, based on the total weight of the reaction product, is added.

15. The method according to Claim 13, wherein about 0.5% to about 1% by weight, based on the total weight of the reaction product, is added

## Patentansprüche

1. Tensidkonzentrat, umfassend:
(a) eine Verbindung gemäß der allgemeinen Formel (III):
R¹O-[CH₂-CH₂O]ₙ-H (III)
worin R¹ für einen gesättigten oder ungesättigten, verzweigten C₆₋₂₂-Rest mit einer durchschnittlichen Verzweigung von etwa 2 bis etwa 8 pro Rest steht und n einen Wert von 0 bis etwa 100 darstellt, und (b) eine Verbindung gemäß der allgemeinen Formel (IV): 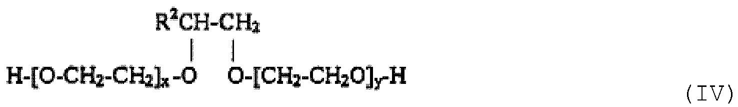 worin R² für einen gesättigten oder ungesättigten C₈₋₁₆-Rest steht und x und y jeweils einen Wert von 0 bis 100 darstellen, wobei die Summe von x und y einen Wert von mindestens 1 bis 100 darstellt,
mit der Maßgabe, dass der Verfestigungspunkt der Tensidzusammensetzung, die man durch Zugabe von Wasser zu dem Tensidkonzentrat erhält, unterhalb von 0°C liegt.

2. Tensidkonzentrat nach Anspruch 1, wobei x und y jeweils einen Wert von 0 bis etwa 75 darstellen und die Summe von x und y einen Wert von mindestens 1 bis 75 darstellt.

3. Tensidkonzentrat nach Anspruch 1, wobei R² etwa 6 bis etwa 14 Kohlenstoffatome enthält.

4. Tensidkonzentrat nach Anspruch 1, wobei R¹ überwiegend 13 Kohlenstoffatome enthält.

5. Tensidkonzentrat nach Anspruch 1, wobei R¹ gesättigt ist und eine durchschnittliche Verzweigung von etwa 2 bis etwa 4 pro Rest aufweist.

6. Tensidkonzentrat nach Anspruch 1, wobei Komponente (a) in einer Menge von etwa 10 bis etwa 99 Gew.-% vorliegt und Komponente (b) in einer Menge von etwa 1 bis etwa 90 Gew.-% vorliegt, bezogen auf das Gesamtgewicht des Konzentrats.

7. Tensidkonzentrat nach Anspruch 1, zu der zur Bildung einer flüssigen Tensidzusammensetzung Wasser gegeben wird.

8. Tensidzusammensetzung nach Anspruch 7, wobei das Tensidkonzentrat in einer Menge von etwa 30 bis etwa 90 Gew.-%, bezogen auf das Gesamtgewicht der flüssigen Tensidzusammensetzung, vorliegt.

9. Tensidzusammensetzung nach Anspruch 7, wobei die Viskosität bei 25°C weniger als 2000 cps beträgt.

10. Tensidzusammensetzung nach Anspruch 7, wobei die Viskosität bei 25°C weniger als 1000 cps beträgt.

11. Tensidkonzentrat nach Anspruch 1, wobei das Tensidkonzentrat zu einer Emulsionspolymerisationsreaktion oder einer Polymerdispersion gegeben wird, und zwar in einer Menge von etwa 0,3 bis etwa 10 Gew.-%, bezogen auf das Gesamtgewicht der Emulsionspolymerisationsreaktion oder der Polymerdispersion.

12. Tensidzusammensetzung nach Anspruch 7, wobei die flüssige Tensidzusammensetzung zu einer Emulsionspolymerisationsreaktion oder einer Polymerdispersion gegeben wird, und zwar in einer Menge von etwa 0,3 bis etwa 10 Gew.-%, bezogen auf das Gesamtgewicht der Emulsionspolymerisationsreaktion oder der Polymerdispersion.

13. Verfahren zur Stabilisierung eines Emulsionspolymers oder einer Polymerdispersion, bei dem man:
zu einem Emulsionspolymer oder einer Polymerdispersion etwa 0,3 bis etwa 10 Gew.-%, bezogen auf das Gesamtgewicht, eines Reaktionsprodukts, umfassend:
eine Verbindung gemäß der allgemeinen Formel (V):
R¹O-[CH₂-CH₂O]ₙ-A (V)
worin R¹ für einen gesättigten oder ungesättigten, verzweigten C₆₋₂₂-Rest mit einer durchschnittlichen Verzweigung von etwa 2 bis etwa 8 pro Rest steht, n einen Wert von 0 bis etwa 100 darstellt und A aus der Gruppe bestehend aus Methyl, Butyl und Benzyl ausgewählt ist; und
eine Verbindung gemäß der allgemeinen Formel (VI): 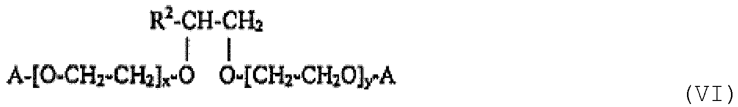
worin R² für einen gesättigten oder ungesättigten C₈₋₁₆-Rest steht und x und y jeweils einen Wert von 0 bis 100 darstellen, wobei die Summe von x und y einen Wert von mindestens 1 bis 100 darstellt, und A aus der Gruppe bestehend aus Methyl, Butyl und Benzyl ausgewählt ist, zugibt.

14. Verfahren nach Anspruch 13, bei dem etwa 0,5 bis etwa 5 Gew.-%, bezogen auf das Gesamtgewicht, des Reaktionsprodukts zugegeben werden.

15. Verfahren nach Anspruch 13, bei dem etwa 0,5 bis etwa 1 Gew.-%, bezogen auf das Gesamtgewicht, des Reaktionsprodukts zugegeben werden.

## Revendications

1. Concentré de tensioactif, comprenant :
(a) un composé de formule générale (III) :
R¹O-[CH₂-CH₂O]ₙ-H (III)
dans laquelle R¹ est un radical en C₆₋₂₂ ramifié, saturé ou insaturé, avec une ramification moyenne d'environ 2 à environ 8 par radical, et dans laquelle n représente une valeur de 0 à environ 100, et
(b) un composé de formule générale (IV) : 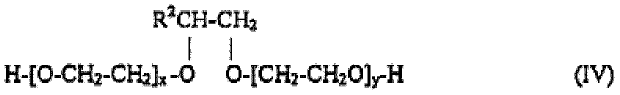 dans laquelle R² est un radical en C₈₋₁₆ saturé ou insaturé, et x et y représentent chacun une valeur de 0 à 100, la somme de x et y représentant une valeur d'au moins 1 à 100,
sous réserve que le point de solidification de la composition de tensioactif que l'on obtient en ajoutant de l'eau au concentré de tensioactif soit inférieur à 0°C.

2. Concentré de tensioactif selon la revendication 1, dans lequel x et y représentent chacun une valeur de 0 à environ 75, et la somme de x et y représente une valeur d'au moins 1 à 75.

3. Concentré de tensioactif selon la revendication 1, dans lequel R² contient environ 6 à environ 14 atomes de carbone.

4. Concentré de tensioactif selon la revendication 1, dans lequel R¹ contient principalement 13 atomes de carbone.

5. Concentré de tensioactif selon la revendication 1, dans lequel R¹ est saturé et possède une ramification moyenne d'environ 2 à environ 4 par radical.

6. Concentré de tensioactif selon la revendication 1, dans lequel le constituant (a) est présent en quantité d'environ 10% à environ 99% en poids, et le constituant (b) est présent en quantité d'environ 1% à environ 90% en poids, par rapport au poids total du concentré.

7. Concentré de tensioactif selon la revendication 1, auquel de l'eau est ajoutée pour former une composition de tensioactif liquide.

8. Composition de tensioactif selon la revendication 7, dans laquelle le concentré de tensioactif est présent en quantité d'environ 30% à environ 90% en poids, par rapport au poids total de la composition de tensioactif liquide.

9. Composition de tensioactif selon la revendication 7, dans laquelle la viscosité à 25°C est inférieure à 2000 cP.

10. Composition de tensioactif selon la revendication 7, dans laquelle la viscosité à 25°C est inférieure à 1000 cP.

11. Concentré de tensioactif selon la revendication 1, dans lequel le concentré de tensioactif est ajouté à une réaction de polymérisation en émulsion ou à une dispersion de polymère en quantité d'environ 0,3% à environ 10% en poids, par rapport au poids total de la réaction de polymérisation en émulsion ou de la dispersion de polymère.

12. Composition de tensioactif selon la revendication 7, dans laquelle la composition de tensioactif liquide est ajoutée à une réaction de polymérisation en émulsion ou à une dispersion de polymère en quantité d'environ 0,3% à environ 10% en poids, par rapport au poids total de la réaction de polymérisation en émulsion ou de la dispersion de polymère.

13. Procédé de stabilisation d'un polymère en émulsion ou d'une dispersion de polymère, comprenant l'étape :
d'addition, à un polymère en émulsion ou à une dispersion de polymère, d'environ 0,3% à environ 10% en poids, par rapport au poids total, d'un produit de réaction comprenant :
- un composé de formule générale (V) :
R¹-O-[CH₂-CH₂O]ₙ-A (V)
dans laquelle R¹ est un radical en C₆₋₂₂ ramifié, saturé ou insaturé, avec une ramification moyenne d'environ 2 à environ 8 par radical, dans laquelle n représente une valeur de 0 à environ 100, et dans laquelle A est choisi parmi les groupes méthyle, butyle et benzyle ; et
- un composé de formule générale (VI) : 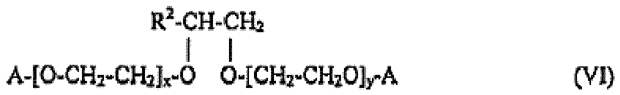 dans laquelle R² est un radical en C₈₋₁₆, saturé ou insaturé, et x et y représentent chacun une valeur de 0 à 100, la somme de x et y représentant une valeur d'au moins 1 à 100, et dans laquelle A est choisi parmi les groupes méthyle, butyle et benzyle.

14. Procédé selon la revendication 13, dans lequel environ 0,5% à environ 5% en poids, par rapport au poids total du produit de réaction, est ajouté.

15. Procédé selon la revendication 13, dans lequel environ 0,5% à environ 1% en poids, par rapport au poids total du produit de réaction, est ajouté.
